(19) Europäisches Patentamt
European Patent Office
Office européen des brevets

(11) EP 0 691 542 A1

## (12) EUROPEAN PATENT APPLICATION

(43) Date of publication:
10.01.1996 Bulletin 1996/02

(51) Int. Cl.⁶: $G01P\ 15/08$, $G01P\ 15/125$, $G01P\ 15/13$

(21) Application number: 95109996.9

(22) Date of filing: 27.06.1995

(84) Designated Contracting States:
DE FR GB IT NL

(30) Priority: 29.06.1994 US 268759

(71) Applicant: TEXAS INSTRUMENTS INCORPORATED
Dallas Texas 75265 (US)

(72) Inventor: Boysel, Robert M.
Plano, TX 75075 (US)

(74) Representative: Schwepfinger, Karl-Heinz, Dipl.-Ing.
D-81241 München (DE)

(54) Improved accelerometers

(57) An apparatus for measuring acceleration using micro-mechanical elements (20, 30, 60, 70, 120). One embodiment has one or more acceleration elements (10) wherein each element includes a mass (12) suspended at the ends thereof with a flexible hinge (13). The mass (12) may deflect in a first and second rotational direction about an axis in response to acceleration. Each element (10) further has electrodes (15) operable to sense deflection of the mass (12) when the mass (12) is deflected in either direction. Detection circuits (25, 65, 125) operate differently depending on whether the deflection is contacting, non-contacting, or feedback.

FIG. 2

EP 0 691 542 A1

## Description

TECHNICAL FIELD OF THE INVENTION

This invention relates generally to accelerometers and more particularly to accelerometers made from micro-mechanical devices and having improved detection circuitry.

BACKGROUND OF THE INVENTION

A position-sensing accelerometer operates on the basic principle that an acceleration to which it is subjected forces an attached mass to move in the direction of its sensitive axis. The mass is attached to a spring or similar element that counteracts the movement of the mass, such that the mass moves until the force from the spring balances the force that the mass experiences due to the acceleration. Measurement of the mass's movement permits the acceleration to be calculated. Other accelerometers are strain-measuring, and have piezo-electric or piezo-resistive material that senses the stress induced by an inertial mass or the strain induced by a spring supporting the mass.

Applications for accelerometers include antilock braking systems, ride suspension systems, in-flight aircraft monitoring, all of which call for small, inexpensive, and reliable devices. For real-time monitoring, in-line digital processing devices control the accelerometer and interpret its output.

Most accelerometers are analog, in the sense that the measurand is an electrical current that varies with the frequency or amplitude of acceleration. However, some accelerometers are digital, in the sense that an electrical contact is made in response to an acceleration of a predetermined value. A series of sensing elements are provided, each having an incrementally higher response threshold and each making an electrical contact when its threshold is reached. A digital accelerometer of this nature is described in an article entitled "Microminiature Ganged Threshold Accelerometers Compatible with Integrated Circuit Technology", IEEE Trans. Elec. Devices, ED-19, No. 1, Jan. 1972.

A problem with many existing accelerometers is that they are large in size relative to the digital processors used to interpret their output. A small size is an especially important consideration for digital accelerometers, whose resolution depends on how many sensing elements are provided. Another problem is that the processes for making many existing accelerometers are not compatible with those used for digital processor devices, so that hybrid assembly is required to combine them with digital processing circuitry. This makes "intelligent accelerometers" expensive to manufacture.

Attempts to solve these problems have led to the manufacture of micro-accelerometers, which may be manufactured using silicon fabrication techniques. These devices typically have masses and springs sculpted from silicon, which exploit the mechanical, as opposed to the electrical, properties of silicon. One type of micro-accelerometer has tiny cantilever beams that extend over an etched-out cavity so that they can bend under an acceleration force. Others use piston-like structures on flexible hinges.

SUMMARY OF THE INVENTION

One embodiment of the invention is a micro-mechanical digital accelerometer that uses either a "contacting" detection circuit or a "non-contacting" detection circuit. The accelerometer has at least one acceleration-responsive element, which has a mass and at least one flexible hinge supporting the mass. The hinge deforms whenever the mass moves out of its normal position in response to an acceleration force. A detection electrode is located under the mass, and a detection circuit for detecting movement of the mass out is in electrical connection to the electrode. For "contacting" detection, the mass contacts the electrode and the detection circuit detects this contact. For "non-contacting" detection, the mass moves toward the electrode but does not touch it, and the detection circuit detects the change in position of the mass. Other embodiments of the invention use a type of micro-mechanical structure that also permits feedback detection so that the mass moves only slightly and also permits the same accelerometer to sense acceleration in either a positive or negative direction.

A technical advantage of all embodiments of the invention is that they have the size and uniformity advantages of micro-mechanical devices. Several embodiments do not require the mass to contact the detection electrode, thereby eliminating problems associated with sticking and reducing mechanical degradation. Some embodiments, as well as not requiring contacting parts, also minimize mechanical movement, which further reduces mechanical degradation. In addition, some embodiments detect acceleration in two directions, thereby decreasing the number of accelerometers that must be used for a particular application.

BRIEF DESCRIPTION OF THE DRAWINGS

FIGURE 1A is a perspective view of a torsion-hinge type of micro-mechanical element.

Figure 1B is a perspective view of a cantilever-hinge type of micro-mechanical element.

Figure 1C is a perspective view of a flexure-hinge type of micro-mechanical element.

FIGURE 2 illustrates a one-directional (half-dimensional) contacting accelerometer.

FIGURE 3 illustrates a two-directional (one dimensional) contacting accelerometer.

FIGURES 4 and 5 illustrate the mechanical operation of a contacting accelerometer.

FIGURE 6 illustrates a one-directional (half dimensional) non-contacting accelerometer;

FIGURE 7 illustrates a two-directional (one dimensional) non-contacting accelerometer.

FIGURES 8 and 9 illustrate the mechanical operation of a non-contacting accelerometer.

FIGURE 10 illustrates a detector circuit for the non-contacting accelerometers of Figures 6 - 9.

FIGURE 11 illustrates the input and output voltage wave forms of the detector circuit of Figure 10.

FIGURE 12 illustrates a two-directional (one dimensional) non-contacting feedback accelerometer.

FIGURE 13 illustrates a one-directional (half dimensional) accelerometer having an array of acceleration elements.

FIGURE 14 illustrates a two-directional (one dimensional) accelerometer having an array of acceleration elements.

DETAILED DESCRIPTION OF THE INVENTION

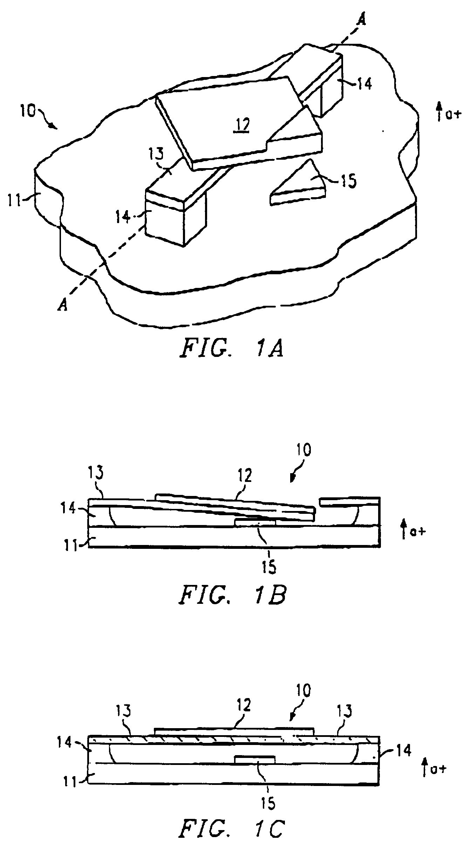

Figures 1A, 1B, and 1C illustrate various embodiments of one element 10 of a micro-mechanical device, each suitable for use in an accelerometer in accordance with the invention. Figure 1A is a torsion-hinge type element 10, Figure 1B a cantilever-hinge type, and Figure 1C a flexure-hinge type.

As explained below, the invention involves various means for detecting when an acceleration acts upon an element 10, or an array of such elements 10. These various detection means are referred to herein as "contacting detection", "non-contacting detection", and "feedback detection". Any three of the different types of elements 10 could be used for contacting detection and non-contacting detection. The torsion-hinge element 10 is suited for feedback detection as well.

The general principle of operation of the three types of elements 10 is the same. Each may be manufactured using integrated circuit techniques that are known in the art of micro-mechanical devices. As explained below, each is manufactured on a substrate, upon which control circuitry is fabricated. Each has a mass attached to a flexible hinge, with the mass being spaced above the substrate by an air gap. The air gap between the substrate and the mass permits the mass to deflect when subjected to an acceleration force.

Figure 1A is a perspective view of a torsion-hinge element 10. In accordance with the above-described general principle of operation, the torsion-hinge element 10 of Figure 1A is fabricated on a substrate 11. Mass 12 is substantially rectangular in shape. Mass 12 is mounted on hinge 13, which extends from two opposing corners of mass 13. Hinge 13 is supported at each end by a post 14, which extends upwardly from substrate 11. Hinge 13 is sufficiently flexible so as to permit mass 12 to rotate about an axis A-A, in response to an acceleration. Mass 12 is asymmetric with respect to this axis of rotation, in the sense that the mass on one side of axis A-A is greater than the mass on the other side.

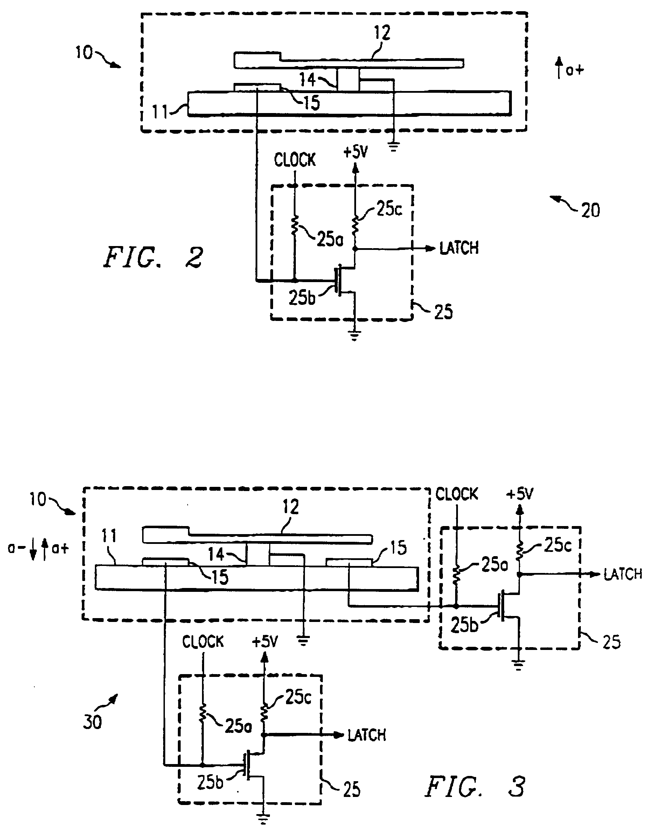

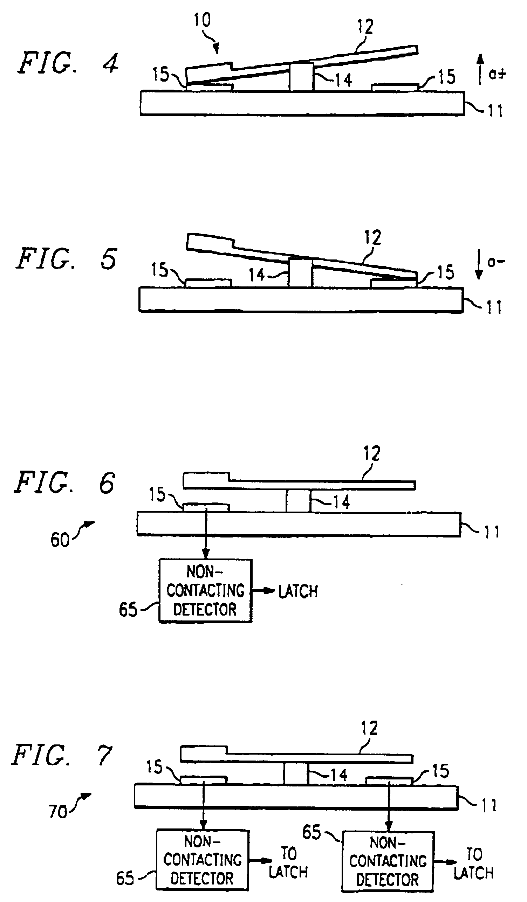

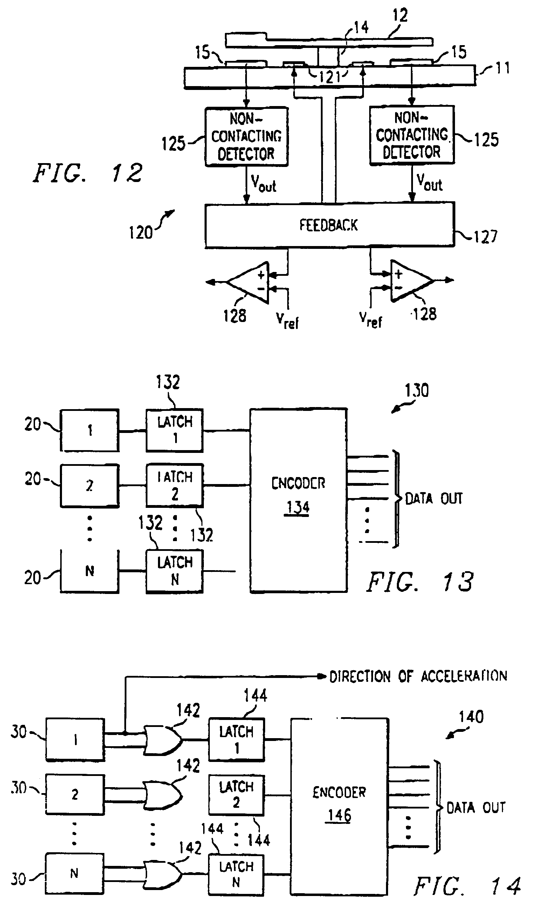

For contacting and non-contacting detection, an acceleration in the direction indicated by the "a+" arrow causes the more massive side of mass 12 to tilt toward the underlying landing electrode 15. Contacting detection is discussed in connection with Figures 2 - 5. Non-contacting detection is discussed in connection with Figures 6 - 11. For feedback detection, the same acceleration causes mass 12 to attempt to tilt toward landing electrode 15, but feedback control circuitry maintains mass 12 in a substantially unchanged position. Feedback detection is discussed in connection with Figure 12.

Figure 1B is a side view of a cantilever-hinge element 10. Cantilever-hinge element 10 is also fabricated on a substrate 11. A mass 12 is mounted at one end of a hinge 13. At its other end, hinge 13 is supported by a post 14. Hinge 13 is sufficiently flexible so as to permit mass 12 to bend downward toward substrate 11 in response to an acceleration. For contacting and non-contacting detection, an acceleration in the direction indicated by the "a+" arrow causes mass 12 to tilt toward landing electrode 15.

Figure 1C is a side view of a flexure-hinge element 10. Flexure-hinge element 10 is also fabricated on a substrate 11.

A substantially rectangular mass 12 is suspended, by hinges 13, usually by hinge 13 at each corner of mass 12. Each hinge 13 is supported by a post 14. Hinges 13 are sufficiently flexible so as to permit mass 12 to translate downward toward substrate 11 in response to an acceleration. For contacting and non-contacting detection, an acceleration in the direction indicated by the "a+" arrow causes mass 12 to deflect toward landing electrode 15.

Various embodiments of micro-mechanical devices with torsion-hinge, cantilever-hinge, and flexure-hinge structures, such as illustrated in Figures 1A, 1B, and 1C, for applications other than accelerometers, are described in the following patents: U.S. Patent No. 4,662,746 entitled "Spatial Light Modulator and Method", U.S. Patent No. 4,956,619 entitled "Spatial Light Modulator, U.S. Patent No. 5,083,857 entitled "Multi-Level Deformable Mirror Device", and U.S. Patent No. 5,061,049 entitled "Spatial Light Modulator and Method". Each of these patents is assigned to Texas Instruments Incorporated and each is incorporated by reference herein.

Digital accelerometers using the micro-mechanical structures illustrated in Figure 1A, 1B, and 1C, with contacting detection means, are described in U.S. Patent No. 5,192,395 entitled "Method of Making Flexure Beam Accelerometer, U.S. Patent No. 5,305,640 entitled "Digital Flexure Beam Accelerometer", and in TI-16506, EPA 93106588.2. This patent and this patent application are assigned to Texas Instruments Incorporated, and are incorporated by reference herein.

Figure 2 is a side view of an accelerometer 20, having a single torsion-hinge type element 10 and a contacting detection circuit 25. As stated above, element 10 could also be a cantilever-hinge type or flexure-hinge type structure, with contacting detection circuit 25 being connected to the electrode 15 associated with each type of structure.

Referring to both Figures 1A and Figure 2, for an accelerometer 20 having a contacting detection means, torsion hinge 13 is sufficiently flexible to allow mass 12 to tilt about axis A-A such that an edge of mass 12 contacts electrode 15. When this occurs, mass 12 is "fully deflected" for purposes of contacting detection. The amount of acceleration necessary to cause full deflection depends upon the torsion constant of hinges 13 as well as on the extent to which mass 12 is asymmetrically distributed on either side of axis A-A.

Detector circuit 25 is in electrical communication with electrode 15. Detector circuit 25 detects when mass 12 fully deflects and produces a corresponding output. Detector circuit 25 has a first resistor 25a, a transistor 25b, and a second resistor 25c. The input of transistor 25b is connected to both a clock input and to electrode 15. The output of transistor 25b is measured across a power supply, via resistor 25c, and ground.

In operation, mass 12 is connected to ground. Detector circuit 25 receives a high frequency clock pulse, which pulses electrode 15 high. In the absence of acceleration, the high pulse causes transistor 25b to turn on, thus producing a logic low level at its output. However, when mass 12 fully deflects and contacts electrode 15, electrode 15 is grounded through mass 12. This causes transistor 25b to turn off, thus producing a high logic level signal at the detector output. A high frequency clock input is used rather than a DC voltage because a DC voltage would tend to cause attraction between mass 12 and electrode 15. Detector circuit 25 thus provides a digital indication of whether mass 12 has fully deflected. The output of detector circuit 25 goes to a latch that samples the output.

Accelerometer 20 senses accelerations approximately perpendicular to the surface of mass 12. However, accelerometer 20 only senses acceleration in one direction, i.e. positive or upward. When it is desired to measure one direction of acceleration, accelerometer 20 provides an economical accelerometer alone, or as an element of an array of accelerometers 20 having varying sensitivity so as to provide a desired resolution.

Figure 3 illustrates an accelerometer 30 that is similar to accelerometer 20, but that measures accelerations in two directions, positive and negative. Accelerometer 30 is nearly identical to accelerometer 20 except it has two electrodes 15 and two detector circuits 25. When mass 12 fully deflects in the first direction, a+, accelerometer 30 operates the same as accelerometer 20 in that an edge of mass 12 contacts an electrode 15 under the more massive side of mass 12. When mass 12 fully deflects in the second direction, a-, the edge on the less massive side of mass 12 contacts the underlying electrode 15, and the associated detector circuit 25 produces a high output.

Accelerometer 30 thus allows detection of both positive and negative acceleration in directions substantially perpendicular to the surface of mass 12. Like accelerometer 20, it can be used as one accelerometer element 30 of an array of accelerometer elements 30 of varying sensitivity.

Accelerometer 30 is "one-dimensional" in the sense that it is capable of sensing acceleration both positively and negatively in one dimension. Using this terminology, accelerometer 20 is "half-dimensional" because it is capable of measuring only positive acceleration in one dimension.

Figure 4 illustrates the mechanical operation of accelerometer 30 in response to "positive" acceleration. More specifically, Figure 4 illustrates mass 12 in a fully deflected condition caused by a acceleration in direction a+. When accelerometer 30 experiences a sufficient acceleration this direction, mass 12 fully deflects such that an edge contacts an electrode 15. Mass 12 deflects in this first direction due to the inertia of mass 12. Because inertia is greater where there is more mass, and because hinges 13 permit a torsion movement, mass 12 rotates toward electrode 15.

Figure 5 illustrates the mechanical operation of accelerometer 30 in response to an acceleration in the direction, a-. In response to an acceleration in this direction that is sufficient to fully deflect mass 12, mass 12 rotates so that it contacts electrode 15.

Figure 6 illustrates an accelerometer 60 having a non-contacting detection circuit 65. As with accelerometers 20 and 30, a torsion-hinge type element 10 is described for purposes of example. However, any of the three types of micro-mechanical elements 10 illustrated in Figure 1A, 1B, or 1C could be used.

Accelerometer 60 is similar to accelerometers 20 and 30. However, accelerometer 60 is constructed such that mass 12 does not deflect far enough to contact electrode 15. Various parameters of acceleration element 10 are selected such that hinge 13 only allows mass 12 to deflect partially towards electrode 15. This can be accomplished, for example, by constructing hinge 13 so that it becomes highly resistant to further twisting after it has twisted a specified amount. Mass 12 is considered "fully deflected" when it reaches a position of maximum displacement that is a certain distance above electrode 15.

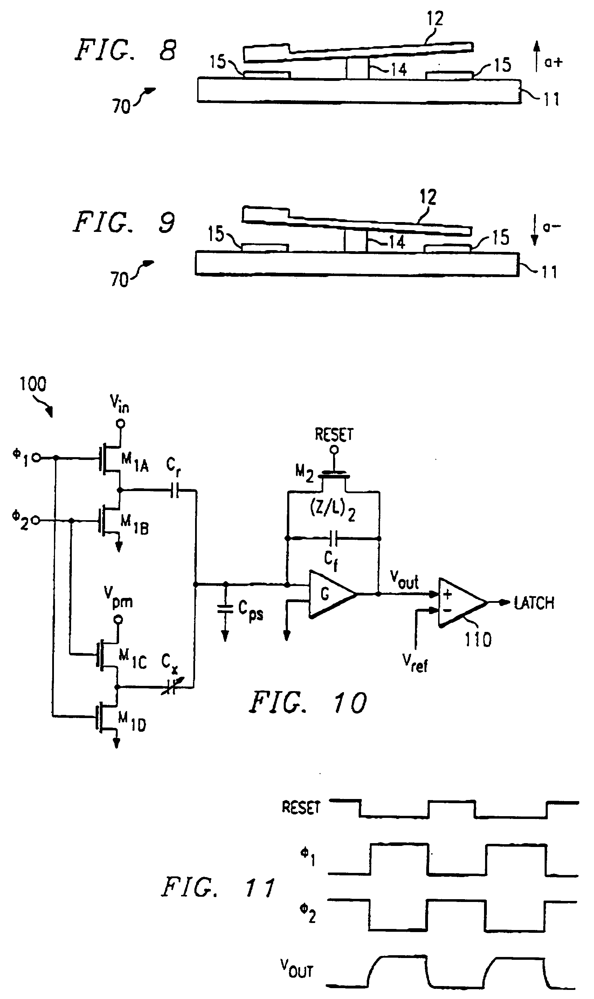

Non-contacting detection circuit 65 differs from contacting detection circuit 25 in that non-contacting detection circuit 65 must sense when mass 12 reaches its fully deflected position without the benefit of an electrical contact. This full deflection of mass 12 can be detected using several methods. For example, detector circuit 65 could be optical and detect the fully deflected position by using one or more optical fibers. Alternatively, detection circuit 65 could be capacitive, and detect the capacitance between mass 12 and electrode 15 when mass 12 moves to the fully deflected position. The "fully deflected" state occurs when the capacitance reaches a predetermined value. As described below in connection with Figures 10 and 11, the embodiment of this description uses this latter type of detection circuit 65. Other detection methods are readily imaginable and could be used without departing from the scope of the invention.

Figure 7 illustrates an accelerometer 70 having two detection circuits 65. Accelerometer 70 is similar to acceleration element 60 except that accelerometer 70 is one-dimensional whereas accelerometer 60 is half-dimensional. The difference between accelerometer 70 and accelerometer 60 resembles the difference between accelerometer 20 and accelerometer 30. To make accelerometer 70 one-dimensional, a second electrode 15 is electrically connected to a second detection circuit 65. The operation of acceleration element 70 is essentially the same as that of acceleration element 60 other than being one-dimensional rather than half-dimensional.

Figure 8 illustrates the mechanical operation of accelerometer 70. An acceleration in the direction a+ causes mass 12 to deflect in the direction of electrode 15. In Figure 8, accelerometer 70 has reached the fully deflected position for acceleration in the direction a+. At full deflection, mass 12 does not contact electrode 15.

Often, it is unnecessary that an accelerometer last for more than one operation. For example, an accelerometer on a missile for initiating an explosion on impact need only operate once. In a case such as this, a contacting torsion-hinge accelerometer 20 or 30 might be preferable because it can be constructed less expensively than the non-contacting accelerometers 60 or 70. When greater longevity is desired, accelerometers 60 and 70 are advantageous because mass 12 does not contact electrode 15, and thus there is no tendency for mass 12 to stick.

Figure 9 illustrates accelerometer 70 with mass 12 fully deflected in response to an acceleration in the direction a-. The response of accelerometer 70 to an acceleration in this direction that is sufficient to fully deflect mass 12 is substantially identical to that described in connection with Figure 8 for an acceleration in the opposite direction. Here, mass 12 deflects towards the electrode 15 that is under the less massive side of mass 12.

Figure 10 illustrates an example of a detector circuit 65 that may be used for accelerometers 60 and 70. The circuit produces a voltage output, $V_{out}$, in accordance with the following formula:

$$V_{out} = V_{pm} \left[ \frac{(C_x - C_r)}{C_f} \right]$$

where $V_{pm}$ is a known voltage, $C_x$ is an unknown capacitance and $C_r$ and $C_f$ are known capacitances. $C_r$ can be chosen as the capacitance of accelerometer 60 or 70 when fully deflected. If the capacitance between mass 12 and electrode 15 is $C_x$ when mass 12 is fully deflected, the value of $V_{out}$ will be nearly zero when accelerometer 60 or 70 is in the fully deflected state. This circuit is further described in Y.E. Park & K.D. Wise, *A MOS Switched-Capacitor Readout Amplifier for a Capacitive Pressure Sensors* in Microsensors, 329 (Richard S. Muller, et al. eds., IEEE Press (1990).

The voltage, $V_{out}$, is delivered to one input of voltage comparator 110 while a reference voltage is delivered to a second input of voltage comparator 110. Comparator 110 produces a binary detector output, which may be delivered to a latch (not shown) that samples this output.

Figure 11 illustrates the electrical signals that are input to and output by the circuit of Figure 10. In operation, $V_{out}$ varies with the position of mass 12. When mass 12 is fully deflected, $V_{out}$ is lower than $V_{ref}$ thus producing a low logic level on the output of voltage comparator 110. When mass 12 is not fully deflected, $V_{out}$ is higher than $V_{ref}$ thus producing a high level logic signal on the output.

Figure 12 illustrates an accelerometer 120 that uses a feedback detection circuit 127. Accelerometer 120 is one-dimensional because it has two electrodes 15 and two detection circuits 125. A half-dimensional accelerometer could be constructed using the same principles with only one electrode 15 and one detection circuit 125.

Accelerometer 120 is constructed similarly to accelerometer 70, excepts that it uses feedback control to keep mass 12 in a substantially stationary position. Accordingly, accelerometer 120, in addition to elements already described, has feedback electrodes 121. These feedback electrodes 121 are fabricated on substrate 11, with one feedback electrode 121 being on one side of the axis of rotation of mass 12 and the other feedback electrode 121 being on the other side of the axis of rotation.

Detection circuits 125 detect non-contacting deflection by mass 12 in either of two directions, and produce output signals that are directly proportional to the displacement of mass 12. Detection circuits 125 can be constructed like the detection circuit 100 of Figure 10 but without comparator 110.

Feedback circuit 127 receives the output of detection circuits 125 and is in electrical communication with feedback electrodes 121. In response to the outputs from detection circuits 125, feedback circuit 127 produces a feedback output that is applied to a feedback electrode 121. The feedback output causes that feedback electrode 121 to produce an electrostatic force opposing the deflection of mass 12 sufficient to counterbalance the acceleration force that is acting on mass 12, thus maintaining a substantially unchanged position of mass 12. In other words, when an acceleration causes mass 12 to attempt to deflect toward either electrode 15, detection circuit 125 detects this movement, in response to which feedback circuit 127 produces a feedback output to counteract the force of the acceleration, thereby preventing mass 12 from changing position. As acceleration increases, the feedback output provided by feedback circuit 127 also increases to counteract the force of the acceleration.

Feedback circuit 127 can be constructed using known feedback circuits such as a differential amplifier, which monitors the difference in the two capacitances detected by the two detection circuits 125. The analog output of the amplifier drives an electrode 15. Thus, when one edge of mass 12 begins to deflect downward, the change in capacitance produces a proportional voltage output, which drives the electrode 15 under the other edge so as to return mass 12 to its undeflected position.

The first feedback output produced by feedback circuit 127 couples to a first comparator 128, and the second feedback output produced by feedback circuit 127 couples to a second comparator 128. Like comparator 110, comparators 128 produce an output indicating whether mass 12 has fully deflected in the first or second direction. Accelerometer 120 is mechanically similar to accelerometer 70. Accordingly, mass 12 is deemed fully deflected when the feedback output reaches a specified magnitude. That magnitude indicates that accelerometer 120 would have "fully deflected", as that term is defined for accelerometer 70, in the absence of feedback applied to either feedback electrode 121.

Accelerometer 120 has the advantage that mass 12 does not deflect significantly. There is no need for non-linear response in torsion hinges 13. Accelerometer 120 also minimizes mechanical degradation because mass 12 moves only slightly out of its undeflected position.

Each of the accelerometers 20, 30, 60, 70, or 120 discussed above can be used as an element of an array of accelerometer elements 20, 30, 60, 70, or 120, to form a highly accurate digital accelerometer. The magnitude of acceleration is measured by the least sensitive accelerometer element that is "fully deflected" as that term is defined for contacting, non-contacting, or feedback detection. The accuracy of the accelerometer is related to the number of accelerometer elements. Because the accelerometers are micro-mechanical devices, a large number may be placed on a single integrated circuit. It should be noted that fault tolerant techniques such as those discussed in U.S. Patent No. 5,192,395 can be used to form digital accelerometers without departing from the teachings of the present invention.

Figure 13 illustrates a half-dimensional digital accelerometer 130 in accordance with the teachings of the invention. Half-dimensional accelerometer 130 has a plurality of accelerometer elements 20, which could alternatively be accelerometer elements 60. It also has a plurality of latches 132 and an encoder 134. The output of each accelerometer element 20 couples to the input of a latch 132. Each latch 132 couples to an input of encoder 134. Encoder 134 outputs a digital value indicating the magnitude of acceleration sensed by accelerometer 130.

Each accelerometer element 20 is designed so that it is fully deflected only by an acceleration exceeding a predetermined magnitude. Depending upon the range of magnitude of accelerations that one desires to measure, and the accuracy of measurement desired, the smallest of these predetermined magnitudes can be chosen to be one of many different values. After determining the predetermined magnitude of an acceleration that will cause full deflection of the most sensitive accelerometer element 20, each of the additional accelerometer elements 20 is designed so that it fully deflects only in response to an acceleration exceeding a specified increment. For example, where an acceleration of predetermined magnitude X is sufficient to cause full deflection of the most sensitive accelerometer element 20, the next accelerometer element 20 could be designed to fully deflect by an acceleration exceeding 2X; the next accelerometer element 20 could deflect only after experiencing an acceleration of magnitude 3X; and so on. Given N accelerometer elements 20, the kth acceleration element would be designed to fully deflect only upon experiencing an acceleration exceeding kX. Each Nth element should fully deflect upon experiencing an acceleration exceeding NX.

Accelerometer elements 20 can be constructed to have varying sensitivity by varying the mass of mass 12 or by varying the torsion constants of hinges 13. Either of these methods may be used with the disclosed accelerometer elements 20. Alternatively, one might use detector circuits with varying threshold levels. For example, multiple comparators could be connected to a single accelerometer element 20, thus providing electronic sensing of several levels of acceleration using a single element 20. One might then combine a group of acceleration elements 20 with varying mass and torsion beam characteristics along with multiple comparators connected to each acceleration element 20.

As illustrated, half-dimensional accelerometer 130 has N acceleration elements. The output of each accelerometer element 20 couples to one of the latches 132, which latch the binary value produced by each accelerometer element 20 so that encoder 134 may provide a digital output indicating the magnitude of an acceleration.

Figure 14 illustrates a one-dimensional accelerometer 140. One-dimensional accelerometer 140 comprises a plurality of acceleration elements 30, which could alternatively be acceleration elements 70 or 120. The outputs of the acceleration elements 30 couple to the inputs of a plurality of OR gates 142. The outputs of OR gates 142 couple to a plurality of latches 144 and the outputs of latches 144 couple to encoder 146. In addition, a direction output couples to one output of the most sensitive accelerometer element 30.

As was the case for half-dimensional accelerometer 130, accelerometer elements 30 are constructed such that the most accelerometer element 30 is fully deflected only by an acceleration exceeding a predetermined minimum magnitude. Each additional accelerometer element 30 is constructed such that it is fully deflected only by an acceleration exceeding a specified increment of this predetermined minimum. As explained in connection with Figure 3, each accelerometer element 30 has two detector circuits 25. One detector circuit 25 indicates that an accelerometer element 30 has fully deflected due to a positive acceleration, while the other detector circuit 25 indicates that the accelerometer element 30 has fully deflected due to a negative acceleration.

In the embodiment illustrated in Figure 14, the outputs of accelerometer elements 30 exhibit a logic level high when full deflection is detected. In this way, both outputs of each accelerometer element 30 may be coupled to one of the OR gates 142. Each OR gate, then, will exhibit a high logic level when full deflection of the corresponding accelerometer element 30 is experienced in either direction, whereas the OR gate 142 will exhibit a logic low output when the accelerometer element 30 is not fully deflected in either direction. In this way, a single encoder 146 can be used to determine the magnitude of an acceleration regardless of its positive or negative direction.

To indicate direction, a direction output couples directly to one output of the most sensitive accelerometer element 30. This accelerometer element 30 will be fully deflected in one direction or the other whenever one-dimensional accelerometer 120 experiences an acceleration greater than its threshold acceleration. In other words, because accelerometer element 30 is the most sensitive of the accelerometer elements 30, it will always be deflected whenever one-dimensional accelerometer 120 experiences an acceleration greater than the smallest acceleration that one-dimensional accelerometer 120 is capable of sensing. Either output of this most sensitive accelerometer element 30 can be used to indicate the direction of an acceleration. The direction of acceleration is determined by which output is activated.

Although the present invention and its advantages have been described in detail, it should be understood that various changes, substitutions and alterations can be made therein without departing from the spirit and scope of the invention as defined by the appended claims.

## Claims

1. A micro-mechanical digital accelerometer comprising:

   at least one acceleration-responsive element, at least one flexible hinge supporting the element, said hinge deforming whenever said element moves out of a normal position in response to an acceleration force, an electrode under the element, and a detection circuit in electrical connection to said electrode for detecting movement of the element out of said normal position; and

   wherein when the element deflects toward said electrode it does not touch said electrode, and wherein said detection circuit detects this change of position of the element.

2. The accelerometer of Claim 1, wherein said element is a torsion-hinge device having a hinge support at opposing edges such that said hinge may deform in a twisting manner to permit the element to rotate, the element being asymmetric with respect to the axis of rotation.

3. The accelerometer of Claim 1, wherein said element is a cantilever-hinge device, being suspended at one end by a hinge such that said hinge deforms in a bending manner to permit the element to deflect in a direction opposite from the direction of said acceleration.

4. The accelerometer of Claim 1, wherein said element is a flexure-hinge type device, suspended by hinges at the perimeter thereof such that said hinges deform to permit the element to deflect in a direction opposite from the direction of said acceleration.

5. The accelerometer of any preceding Claim, wherein said detection circuit optically detects the change in position of the element.

6. The accelerometer of any of Claims 1 to 4, wherein said detection circuit detects a change in capacitance between the element and said electrode.

7. The accelerometer of Claim 6, wherein said change in capacitance is a predetermined value when the element is defined to be fully deflected.

8. The accelerometer of any preceding Claim, wherein the element deflects only slightly and further comprising a feedback circuit for restoring the element to its undeflected position in response to a slight deflection.

9. The accelerometer of of any preceding Claim, wherein said accelerometer has a plurality of said elements, each element having a corresponding detection circuit, and each element operable to fully deflect upon experiencing a different magnitude of acceleration, and further comprising an encoder for producing a digital output indicating the magnitude of acceleration.

FIG. 1A

FIG. 1B

FIG. 1C

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

**European Patent Office**

## EUROPEAN SEARCH REPORT

Application Number

EP 95 10 9996

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-4 855 544 (MAX C. GLENN) | 1-3,6-9 | G01P15/08 |
| Y | * column 1, line 13-41 * | 1,4 | G01P15/125 |
| Y | * figures 1-3 * | 1,5 | G01P15/13 |
| Y | GB-A-2 101 336 (CENTRE ELECTRONIQUE HORLOGER SA.) <br> * page 1, line 96-125 * <br> * page 2, line 122 - page 3, line 27; figures 1,5 * | 1-3,6-9 | |
| Y,D <br> A | US-A-5 305 640 (BOYSEL ET AL) <br> * column 2, line 15-34 * <br> * column 3, line 19-47; figures 2-6 * | 1,4 <br> 9 | |
| Y | EP-A-0 151 957 (ASEA AB) <br> * page 5, line 12-23 * <br> * column 6, line 33 - column 7, line 14; figure 1 3A 3B * | 1,5 | |
| A | DE-C-266 841 (DR.-ING. OTTO SCHÄFER) <br> * page 1, line 1-40; figure 1 * | 1,3,9 | **TECHNICAL FIELDS SEARCHED** (Int.Cl.6) <br><br> G01P |

The present search report has been drawn up for all claims

| Place of search | Date of completion of the search | Examiner |
|---|---|---|
| THE HAGUE | 3 November 1995 | Hansen, P |

EPO FORM 1503 03.82 (P04C01)